# EUROPEAN PATENT APPLICATION

(11) **EP 4 786 030 A1**
(43) Date of publication of application: **05.08.2026**
(21) Application number: 25867305.2
(22) Date of filing: 08.04.2025
(51) Int. Cl.: B01D 53/04, C01B 13/02

(54) **MODULAR OXYGEN GENERATOR**

(30) Priority: 18.12.2024 CN 202411874749
(71) Applicant: Qingdao Augreener Electronic Technology Co., Ltd., Qingdao, Shandong 266555 (CN)
(72) Inventor: WANG, Mingshan, Qingdao, Shandong 266555 (CN); ZHANG, Benrong, Qingdao, Shandong 266555 (CN); RUAN, Qiang, Qingdao, Shandong 266555 (CN); LIU, Tongshuai, Qingdao, Shandong 266555 (CN); SUN, Zeguo, Qingdao, Shandong 266555 (CN)
(74) Representative: Rau, Schneck & Hübner Patentanwälte Rechtsanwälte PartGmbB
(86) International application number: PCT/CN2025/087759
(87) International publication number: WO 2026/129515

(57) **Abstract**

The present disclosure relates to a technical field of oxygen generation equipment, and discloses a modular oxygen concentrator, which includes: a main frame module including a main frame, and an oxygen storage tank and a control assembly disposed inside the main frame; a compressor module located on one lateral side of the main frame and slidably and detachably connected to the main frame by a first detachment structure; a molecular sieve module located on the other lateral side of the main frame and slidably and detachably connected to the main frame by a second detachment structure; and a battery module located on a lower side of the main frame and slidably and detachably connected to the main frame by a third detachment structure; the compressor module, the molecular sieve module, and the battery module are electrically connected to the main frame module by electrical socket structures, respectively; the main frame module is provided with a compressor air receiving seat interfacing with an air outlet of the compressor module, and a molecular sieve air receiving seat interfacing with an air inlet and an air outlet of the molecular sieve module, and the compressor air receiving seat, the molecular sieve air receiving seat, and the oxygen storage tank are connected in sequence by pipelines to be in air communication. According to the modular design of the above modular oxygen concentrator, the compressor module, the molecular sieve module, and the battery module can be independently attached and quickly detached, which not only improves independence of respective functional modules, but also greatly simplifies maintenance and replacement operations of the oxygen concentrator.

## Description

### TECHNICAL FIELD

The present disclosure relates to a technical field of oxygen generation equipment, and in particular to a modular oxygen concentrator.

### BACKGROUND

At present, a household oxygen concentrator mainly relies on an air compressor to compress air, and separates and extracts oxygen from the air by a molecular sieve to provide pure oxygen for home use. In a common product form of the household oxygen concentrator, a molecular sieve tank and an air compressor are both integrated inside equipment as core components. However, this integrated design has some shortcomings, especially a service life of a molecular sieve is critical to performance of an oxygen concentrator, and once aging or a failure occurs, a user always needs to replace the entire equipment, which not only increases use costs, but also limits equipment maintainability and equipment sustainability.

In Patent Publication No. CN210656150U, an oxygen concentrator having a detachable module detachable from an oxygen concentrator main body is disclosed. In this design, a compressor and a molecular sieve tank are integrated in the detachable module, so that when the molecular sieve tank or the compressor needs to be replaced or maintained, the detachable module can be detached from the oxygen concentrator main body to implement separate replacement or maintenance. This design, to some extent, solves problems of difficult maintenance and high use costs of the oxygen concentrator. However, in the above solution, since the molecular sieve tank and the compressor share one detachable module, when the molecular sieve tank or the compressor needs to be replaced separately, the entire module still needs to be detached, resulting in cumbersome detachment and attachment operations, which is inconvenient for a user to perform finer maintenance.

### SUMMARY

Based on the technical problems in the related art, the present disclosure provides a modular oxygen concentrator that enables efficient integration and independent detachment of various functional modules, thereby improving equipment maintainability and reducing use costs.

The present disclosure provides a modular oxygen concentrator, comprising:
a main frame module comprising a main frame, and an oxygen storage tank and a control assembly disposed inside the main frame;
a compressor module located on one lateral side of the main frame and slidably and detachably connected to the main frame by a first detachment structure;
a molecular sieve module located on the other lateral side of the main frame and slidably and detachably connected to the main frame by a second detachment structure; and
a battery module located on a lower side of the main frame and slidably and detachably connected to the main frame by a third detachment structure;
the compressor module, the molecular sieve module, and the battery module are electrically connected to the main frame module by electrical socket structures, respectively;
the main frame module is provided with a compressor air receiving seat interfacing with an air outlet of the compressor module, and a molecular sieve air receiving seat interfacing with an air inlet and an air outlet of the molecular sieve module, and the compressor air receiving seat, the molecular sieve air receiving seat, and the oxygen storage tank are connected in sequence by pipelines to be in air communication.

In some embodiments, the first detachment structure and the second detachment structure are both located at a bottom of the main frame, and after the battery module is detached, the first detachment structure and the second detachment structure are released from a locked state.

In some embodiments, a first sliding groove structure is provided between the battery module and a bottom surface of the main frame, and the battery module is detached and attached in a horizontal direction via the first sliding groove structure.

In some embodiments, the one lateral side of the main frame is a side opening structure, the compressor module is embedded in the side opening structure, a second sliding groove structure is provided between an upper end and/or a lower end of the side opening structure and the compressor module, and the compressor module is detached and attached in a horizontal direction via the second sliding groove structure.

In some embodiments, the other lateral side of the main frame is a semi-open structure, the molecular sieve module is disposed in the semi-open structure, a third sliding groove structure is disposed between a side surface of the semi-open structure and the molecular sieve module, and the molecular sieve module is detached and attached in a vertical direction via the third sliding groove structure.

In some embodiments, the compressor module comprises a compressor shell assembly and a compressor disposed inside the compressor shell assembly; an upper side surface of the main frame is provided with an air inlet, and a top surface of the side opening structure is provided with an air outlet hole; ambient air enters through the air inlet and is discharged through the air outlet hole to form an oxygen generation airflow; and a top of the compressor shell assembly is provided with an air inlet cavity corresponding to the air outlet hole, and the air inlet cavity introduces the oxygen generation airflow into the compressor through an air guide pipe.

In some embodiments, the compressor air receiving seat is provided at a bottom at an inner side of the side opening structure; a compressor air outlet interface communicating with a compressor air discharge port is provided on a side surface of the compressor module 20 located on the inner side of the side opening structure; after the compressor module is assembled in place in the horizontal direction, the compressor air outlet interface is correspondingly inserted into the compressor air receiving seat to achieve hermetic connection.

In some embodiments, the molecular sieve air receiving seat is disposed on a bottom surface of the semi-open structure, and has an air inlet channel and an oxygen outlet channel; a bottom of the molecular sieve module is provided with a molecular sieve air inlet interface and a molecular sieve oxygen outlet interface; after the molecular sieve module is assembled in place in a vertical direction, the molecular sieve air inlet interface and the molecular sieve oxygen outlet interface are respectively inserted into the air inlet channel and the oxygen outlet channel in the molecular sieve air receiving seat to achieve hermetic connection; the other end of the air inlet channel is in communication with the compressor air receiving seat by pipelines, and the other end of the oxygen outlet channel is in communication with the oxygen storage tank by pipelines.

In some embodiments, the electrical socket structure between the compressor module and the main frame module comprises: a first electrical connector, disposed on a bottom surface or a top surface of the side opening structure, and electrically connected to the control assembly; a second electrical connector, disposed at a bottom or a top of the compressor module corresponding to the first electrical connector; one of the first electrical connector and the second electrical connector is a plug, and the other is a socket; after the compressor module is assembled in place in a horizontal direction, electrical connection is achieved by laterally inserting the plug into the socket.

In some embodiments, the electrical socket structure between the molecular sieve module and the main frame module comprises: a third electrical connector, disposed on a bottom surface of the semi-open structure, and electrically connected to the control assembly; a fourth electrical connector, disposed at a bottom of the molecular sieve module corresponding to the third electrical connector; one of the third electrical connector and the fourth electrical connector is a plug, and the other is a socket; after the molecular sieve module is assembled in place in a vertical direction, electrical connection is achieved by vertically inserting the plug into the socket.

In some embodiments, the electrical socket structure between the battery module and the main frame module comprises: a fifth electrical connector, disposed on a bottom surface of the main frame, and electrically connected to the control assembly; a sixth electrical connector, disposed on a top of the battery module corresponding to the fifth electrical connector; one of the fifth electrical connector and the sixth electrical connector is a plug, and the other is a socket; after the battery module is assembled in place in a horizontal direction, electrical connection is achieved by laterally inserting the plug into the socket.

In some embodiments, the first detachment structure comprises: a filtering cavity opening, provided at a bottom of the compressor module, the filtering cavity opening communicating with a filtering cavity located in the compressor module and configured to filter inlet air of a compressor; a cover body, detachably disposed at the filtering cavity opening, configured to open or close the filtering cavity; a main frame opening, provided in the main frame, an opening size of the main frame opening being adapted to the cover body, so as to detach or attach the cover body through the main frame opening; the cover body has a cover body extension portion, the cover body extension portion at least partially extending into the main frame opening to limit sliding movement between the compressor module and the main frame.

In some embodiments, the first detachment structure further comprises a limiting connector, and the limiting connector is disposed between the main frame and the compressor module; the limiting connector is a quick release bolt.

In some embodiments, the first detachment structure further comprises a limiting connector, the limiting connector is a compressor key, and the compressor key is disposed on the compressor module; the main frame is provided with a limiting through hole, and the compressor key is inserted into the limiting through hole for locking; when being pressed, the compressor key moves upward to exit the limiting through hole, thereby releasing a locked state of the compressor key and the limiting through hole.

In some embodiments, the second detachment structure comprises: a locking groove, provided on a bottom surface of the molecular sieve module; a locking member, movably disposed on the main frame, and matched with the locking groove; a molecular sieve key, configured to push the locking member to exit the locking groove; a detachment and attachment direction of the molecular sieve module is perpendicular to a movable direction of the locking member.

In some embodiments, the second detachment structure comprises: an engagement pawl, provided on a bottom surface of the molecular sieve module, and extending along an attachment direction of the molecular sieve module; an engagement port, provided on the main frame, and matched with the engagement pawl; a molecular sieve button, configured to release an engagement between the engagement pawl and the engagement port; a detachment and attachment direction of the molecular sieve module is parallel to a moving direction of the molecular sieve button when releasing the engagement.

In some embodiments, the second detachment structure comprises: a molecular sieve fastener, disposed at a bottom of the main frame; the molecular sieve fastener has a fastening column and a handle located at a lower end of the fastening column; a bottom surface of the main frame is provided with an accommodation groove for accommodating the handle; a molecular sieve air receiving seat configured to be in communication with an internal air path of the molecular sieve module is provided on the main frame, and a through hole extending vertically and allowing the molecular sieve fastener to pass through is opened in the molecular sieve air receiving seat; a fastening hole, provided at a bottom of the molecular sieve module, and cooperatively arranged with the molecular sieve fastener.

In some embodiments, the third detachment structure comprises: a limiting slot, disposed on a bottom surface of the main frame; a quick detachment assembly, disposed on the battery module, comprising a battery key and a snap; the snap is engaged with the limiting slot to limit displacement of the battery module in a sliding direction; the battery key is configured to drive the snap to move so as to make it exit the limiting slot, thereby releasing an engagement between the snap and the limiting slot.

In some embodiments, a top surface of the side opening structure is further provided with an air outlet, and a fan is disposed in the main frame inside the air outlet; an airflow entering through the air inlet and discharged through the air outlet forms a heat dissipation airflow; a top of the compressor shell assembly is provided with an air inlet region corresponding to the air outlet, and the heat dissipation airflow flows into the compressor shell assembly through the air inlet region; the compressor shell assembly is provided with an external heat dissipation port and an internal heat dissipation port, and a part of the heat dissipation airflow is output to the outside through the external heat dissipation port; a part of the heat dissipation airflow flows to the molecular sieve module through the internal heat dissipation port.

In some embodiments, the control assembly is disposed on an upper portion of the main frame, and the heat dissipation airflow flows through the control assembly; the oxygen storage tank is vertically disposed in a middle portion of the main frame; the compressor module and the molecular sieve module are located on two sides of the oxygen storage tank; a bottom of the main frame is provided with an auxiliary oxygen storage tank, and the auxiliary oxygen storage tank is communicated in series with the oxygen storage tank.

Compared with the related art, the present disclosure has the following advantages and positive effects.

According to the modular design of the above modular oxygen concentrator, the compressor module, the molecular sieve module, and the battery module can be independently attached and quickly detached, which not only improves independence of respective functional modules, but also greatly simplifies maintenance and replacement operations of the oxygen concentrator. In an actual use, when a module fails or needs to be replaced periodically, a user can replace the corresponding module separately according to the needs without complex detaching or repair of the entire equipment, which not only reduces maintenance costs and a downtime, but also improves a long-term use stability of the oxygen concentrator.

### BRIEF DESCRIPTION OF THE SEVERAL VIEWS OF THE DRAWINGS

In order to more clearly describe technical solutions of embodiments of the present disclosure, accompanying drawings that need to be used in description of some embodiments will be briefly introduced below, it is obvious that the accompanying drawings in the following description are merely some embodiments of the present disclosure, and those skilled in the art can obtain other drawings according to these drawings without creative efforts.
Fig. 1 is a perspective view of a modular oxygen concentrator of the present disclosure;
Fig. 2 is a perspective view of the modular oxygen concentrator of the present disclosure when viewed from another viewing angle;
Fig. 3 is a state diagram of a battery module detached from the modular oxygen concentrator of the present disclosure;
Fig. 4 is a schematic diagram of detaching and attaching functional modules from and to the modular oxygen concentrator of the present disclosure;
Fig. 5 is a perspective view in a bottom view direction of the oxygen concentrator after the battery module is detached from the modular oxygen concentrator of the present disclosure;
Fig. 6 is a perspective view of a main frame module in the modular oxygen concentrator of the present disclosure;
Fig. 7 is a perspective view of the main frame module in the modular oxygen concentrator of the present disclosure when viewed from another viewing angle;
Fig. 8 is a second perspective view of a compressor module in the modular oxygen concentrator of the present disclosure when viewed from another viewing angle;
Fig. 9 is a perspective view of the compressor module in the modular oxygen concentrator of the present disclosure;
Fig. 10 is a perspective view of the compressor module in the modular oxygen concentrator of the present disclosure when viewed from another viewing angle, and is a top view;
Fig. 11 is a perspective view of the compressor module in the modular oxygen concentrator of the present disclosure when viewed from another viewing angle, and is a bottom view;
Fig. 12 is a longitudinal cross-sectional view of the modular oxygen concentrator in some embodiments of the present disclosure;
Fig. 13 is an enlarged view of a part II in Fig. 12;
Fig. 14 is a perspective view of a molecular sieve module in a modular oxygen concentrator in some other embodiments of the present disclosure;
Fig. 15 is a longitudinal cross-sectional view of the modular oxygen concentrator of Fig. 14;
Fig. 16 is an enlarged view of a part III in Fig. 15;
Fig. 17 is a longitudinal cross-sectional view of a modular oxygen concentrator in some other embodiments of the present disclosure;
Fig. 18 is a schematic structural diagram of a molecular sieve fastener in Fig. 17;
Fig. 19 is a schematic structural diagram of the battery module in the modular oxygen concentrator of the present disclosure;
Fig. 20 is a cross-sectional view of the modular oxygen concentrator of the present disclosure;
Fig. 21 is an enlarged view of a part I in Fig. 20;
Fig. 22 is an exploded view of a quick detachment assembly in the battery module;
Fig. 23 is a cross-sectional view of the main frame module in the modular oxygen concentrator of the present disclosure, and shows an auxiliary oxygen storage tank;

### Description of reference signs:

10 main frame module;
11 main frame; 111 base portion; 1111 limiting slot; 1112 first slot limiting member; 1113 second slot limiting member; 1114 engagement port; 1115 molecular sieve key attachment hole; 1116 molecular sieve button attachment hole; 1117 limiting through hole; 1118 main frame opening; 1119 accommodation groove; 112 vertical frame portion; 1121 third slot limiting member; 113 upper frame portion; 1131 air inlet; 1132 air outlet hole; 1133 air outlet;
12 control assembly;
13 fan;
14 oxygen storage tank; 141 auxiliary oxygen storage tank;
15 locking member; 16 molecular sieve key;
17 molecular sieve button;
18 molecular sieve fastener; 181 fastening column; 182 handle;
191 compressor air receiving seat; 192 molecular sieve air receiving seat;
1101 first electrical connector; 1102 third electrical connector; 1103 fifth electrical connector; 1104 cover body; 11041 cover body extension portion;
20 compressor module;
21 compressor shell assembly; 211 limiting edge; 212 air inlet cavity; 213 compressor air outlet interface; 214 air inlet region; 215 filtering cavity opening; 216 external heat dissipation port; 217 internal heat dissipation port;
22 compressor;
23 compressor key;
24 second electrical connector;
30 molecular sieve module;
31 third sliding portion;
32 locking groove;
33 engagement pawl;
34 molecular sieve air inlet interface; 35 molecular sieve oxygen outlet interface;
36 fourth electrical connector;
37 fastening hole;
38 auxiliary air inlet;
40 battery module;
41 battery module outer shell; 411 sliding portion; 412 through hole; 413 battery key attachment hole;
42 battery assembly;
43 quick detachment assembly; 431 battery key; 4311 key main body; 4312 force applying portion; 432 snap; 433 elastic member; 434 attachment seat;
44 sixth electrical connector.

### DETAILED DESCRIPTION OF THE DISCLOSURE

Technical solutions in embodiments of the present disclosure will be clearly and completely described below with reference to the accompanying drawings in some embodiments of the present disclosure, and obviously, the described embodiments are merely a part of embodiments of the present disclosure, and are not all embodiments. Based on some embodiments of the present disclosure, all other embodiments obtained by those skilled in the art without creative efforts shall fall within the scope of the present disclosure.

In the description of the present disclosure, it should be understood that orientations or positional relationships indicated by terms "center", "upper", "lower", "front", "rear", "left", "right", "vertical", "horizontal", "top", "bottom", "inner", "outer", and the like are based on orientations or positional relationships shown in the drawings, and are merely for the convenience of describing the present disclosure and simplifying the description, rather than indicating or implying that the indicated device or element must have a specific orientation or must be constructed and operated in a specific orientation, and thus, these cannot be understood as a limitation of the present disclosure.

In the description of the present disclosure, it should be noted that, unless otherwise explicitly specified and limited, terms "attachment", "coupling", and "connection" should be understood in a broad sense, for example, these terms may represent a fixed connection, a detachable connection, or an integral connection. For those skilled in the art, specific meanings of the above terms in the present disclosure may be understood according to specific situations. In the descriptions of the one or more embodiments, specific features, structures, materials, or characteristics may be combined in an appropriate manner in any one or more embodiments or examples.

Terms "first" and "second" are used for description only, and cannot be understood as indicating or implying relative importance or implicitly representing the number of indicated technical features. Therefore, features limited to "first" and "second" may explicitly or implicitly include one or more of the features. In the description of the present disclosure, unless otherwise specified, "a plurality of" means two or more.

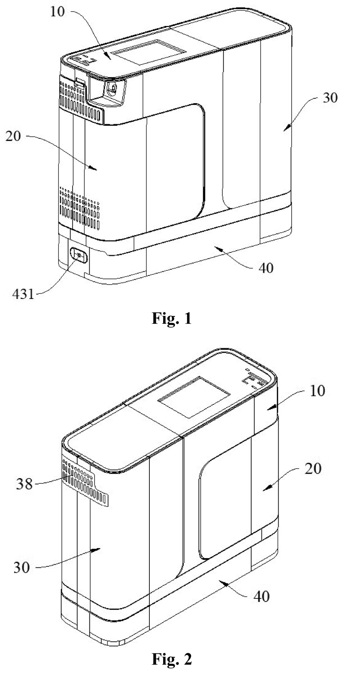

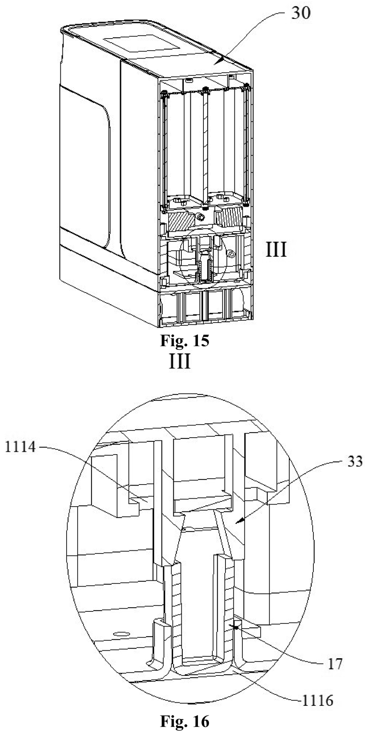

Figs. 1 to 23 show some embodiments of a modular oxygen concentrator of the present disclosure. The modular oxygen concentrator in one or more embodiments of the present disclosure has a highly modular and convenient detachment design, which not only facilitates maintenance and replacement of components, but also greatly improves use flexibility and portability of the oxygen concentrator.

As shown in Fig. 1 and Fig. 2, the oxygen concentrator in some embodiments is a modular oxygen concentrator, and includes a main frame module 10 and various functional modules that can be detached from and attached to the main frame module 10, and the various functional modules include a compressor module 20, a molecular sieve module 30, and a battery module 40.

The main frame module 10 is a main body of the modular oxygen concentrator, and is mainly configured to connect and support the various functional modules.

The compressor module 20 includes a compressor shell assembly 21 and a compressor 22 disposed inside the compressor shell assembly 21, and the compressor 22 inhales and compresses ambient air to a certain pressure to provide necessary power and pressure conditions for a subsequent air separation process.

The molecular sieve module 30 is a core part for achieving oxygen separation in the oxygen concentrator. A specific molecular sieve material is used to separate oxygen and nitrogen from the compressed air in accordance with the principle of adsorption and desorption.

The battery module 40 provides electric power support for the entire oxygen concentrator. A high-performance lithium battery or rechargeable battery pack is usually adopted to ensure that the oxygen concentrator can still operate continuously in a power-off or mobile environment. The battery module 40 not only supplies electric power to key components such as the compressor 22 and a molecular sieve tank, but also ensures a portability and an endurance ability of the oxygen concentrator, so that the battery module 40 is suitable for various scenarios and user requirements.

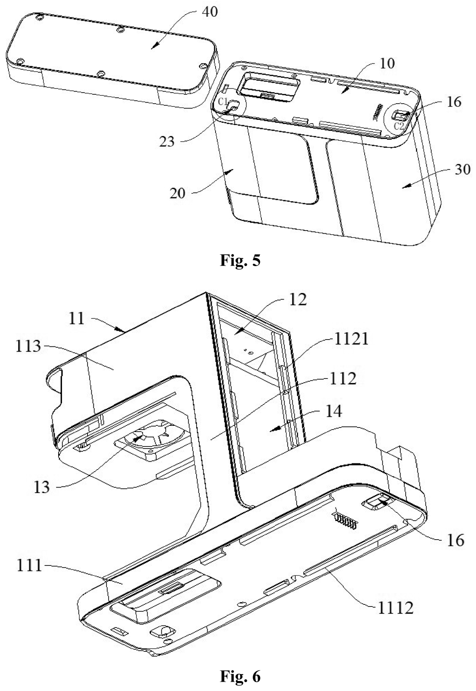

As shown in Fig. 6, the main frame module 10 includes a main frame 11, and an oxygen storage tank 14 and a control assembly 12 disposed inside the main frame 11. The main frame 11 is a main support structure. The oxygen storage tank 14 is connected to the molecular sieve module 30 to store generated oxygen. The control assembly 12 is used to electrically control the oxygen concentrator, and is responsible for controlling a working process of the entire oxygen concentrator and a coordinated operation of various modules.

Referring to Fig. 5, the compressor module 20 is located on one lateral side of the main frame 11, and is slidably and detachably connected to the main frame 11 by a first detachment structure C1.

The molecular sieve module 30 is located on the other lateral side of the main frame 11, and is slidably and detachably connected to the main frame 11 by a second detachment structure C2.

The battery module 40 is located on a lower side of the main frame 11, and is slidably and detachably connected to the main frame 11 by a third detachment structure.

The compressor module 20, the molecular sieve module 30, and the battery module 40 are electrically connected to the main frame module 10 by electrical socket structures, respectively. Each of the electrical socket structures not only has a simple design, but also has a function of quick connection and disconnection, thereby ensuring that each of the functional modules can be electrically connected to the main frame module 10 quickly and stably.

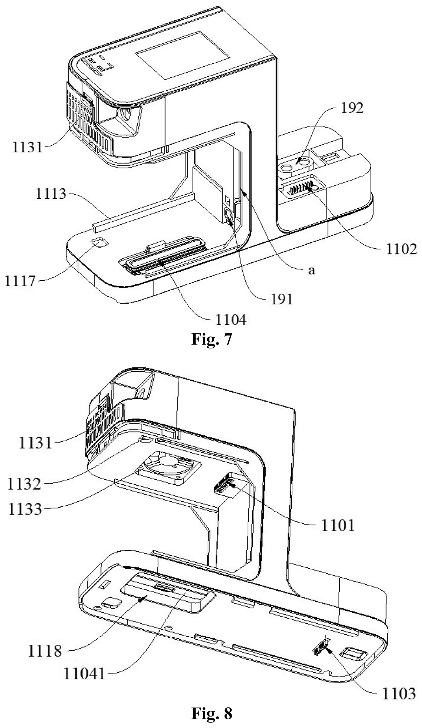

As shown in Fig. 7, the main frame module 10 is provided with a compressor air receiving seat 191 interfacing with an air outlet of the compressor module 20, and is further provided with a molecular sieve air receiving seat 192 interfacing with an air inlet and an air outlet of the molecular sieve module 30. The compressor air receiving seat 191, the molecular sieve air receiving seat 192, and the oxygen storage tank 14 are connected in sequence by pipelines to be in air communication. After the compressor module 20 and the molecular sieve module 30 are slidably attached, a quick connection can be realized by the compressor air receiving seat 191 and the molecular sieve air receiving seat 192, and the compressor air receiving seat 191 and the molecular sieve air receiving seat 192 are then connected to the oxygen storage tank 14 by the pipeline, thereby ensuring a smooth flow of air and efficient execution of an oxygen separation process.

According to the modular design of the above modular oxygen concentrator, the compressor module 20, the molecular sieve module 30, and the battery module 40 can be independently attached and quickly detached, which not only improves independence of respective functional modules, but also greatly simplifies maintenance and replacement operations of the oxygen concentrator. In an actual use, when a module fails or needs to be replaced periodically, a user can replace the corresponding module separately according to the needs without complex detaching or repair of the entire equipment, which not only reduces maintenance costs and a downtime, but also improves a long-term use stability of the oxygen concentrator.

In addition, the modular design also greatly improves a scalability and an adaptability of the oxygen concentrator. A user can select the compressor module 20, the molecular sieve module 30, and the battery module 40 of different specifications according to actual requirements, so that functions of the equipment can be flexibly adjusted according to environmental changes or different usage scenarios. For example, in a static application scenario, the user may need a stronger endurance ability, and may select the battery module 40 with a larger capacity, whereas in a scenario in which oxygen needs to be supplied efficiently, the user may need to select the compressor module 20 with a larger power and/or the molecular sieve module 30 with a higher efficiency. Such a module selection with high flexibility enables the oxygen concentrator to be widely used in different fields such as homes, hospitals, wilderness, and emergency rescue.

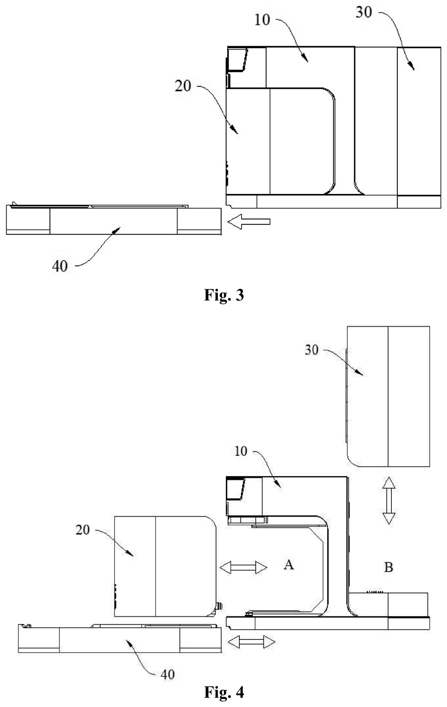

In some embodiments of this application, as shown in Fig. 4, one lateral side of the main frame 11 is a side opening structure, a second sliding groove structure is provided between an upper end and/or a lower end of the side opening structure and the compressor module 20, and the compressor module 20 can be detached and attached in a horizontal direction via the second sliding groove structure.

The other lateral side of the main frame 11 is a semi-open structure, the molecular sieve module 30 is disposed in the semi-open structure, a third sliding groove structure is disposed between a side surface of the semi-open structure and the molecular sieve module 30, and the molecular sieve module 30 can be detached and attached in a vertical direction via the third sliding groove structure.

Specifically, reasons for the compressor module 20 to be detached from and attached to the main frame 11 horizontally by the side opening structure and the molecular sieve module 30 to be detached from and attached to the main frame 11 vertically by the semi-open structure are as follows.

The compressor substantially is a member placed horizontally, and it is more convenient for the compressor to be attached horizontally, and at the same time, it is usually necessary to provide a corresponding fan assembly and a corresponding air inlet structure above the compressor module 20 for heat dissipation and air intake of the compressor module 20, and thus a space for attaching structures needs to be provided above the compressor module, and since the compressor module 20 vibrates during the operation, the engagement and horizontal placement of the side opening structure can effectively ensure the stability of the compressor module after attaching.

A functional effect of the molecular sieve module 30 is mainly related to a filling amount of a molecular sieve, that is, the more the molecular sieve is filled, the better the treatment effect, and thus, a length of the molecular sieve module 30 can be greatly extended in combination with the semi-open structure. Meanwhile, the semi-open structure also facilitates the overall detachment and attachment of the molecular sieve module in later stages. In addition, the accuracy and the reliability of the molecular sieve module during air path interfacing need to be considered. Compared with other forms, the vertical attaching mode can avoid an influence of reduced interfacing accuracy due to a weight of the molecular sieve itself, thereby improving an airtight effect.

Further, in combination with the disposing basis of the above structure, the attaching and detaching modes of the battery module 40 are designed. Specifically, as shown in Fig. 3, a first sliding groove structure is provided between the battery module 40 and a bottom surface of the main frame 11, and the battery module 40 can be detached and attached in the horizontal direction via the first sliding groove structure.

The battery module 40 is attached at the bottom surface of the main frame 11 for two reasons. Firstly, attachment is convenient and detachment can be performed quickly without affecting the compressor module 20 and the molecular sieve module 30 during the detachment, and secondly, a corresponding logic design is performed for a detachment step to reduce an equipment risk.

Specifically, when the battery module 40 is not detached, the first detachment structure C1 and the second detachment structure C2 are in a locked state to ensure a stable connection between the modules. After the battery module 40 is detached, the first detachment structure C1 and the second detachment structure C2 can be released from the locked state, and the user is allowed to freely attach and detach the compressor module 20 and the molecular sieve module 30.

Phenomenons of electricity leakage and air leakage are avoided in principle, after the battery module 40 is detached, the entire equipment components are in a power-off state, and the equipment does not operate, and in this case, the detachment and attachment of the compressor module 20 and the molecular sieve module 30 are very safe and reliable.

Specifically, referring to Fig. 6, the main frame 11 includes a base portion 111, a vertical frame portion 112, and an upper frame portion 113.

The base portion 111 is used to support the entire structure, the vertical frame portion 112 is vertically disposed on the base portion 111, and the upper frame portion 113 is connected to a top end and located on one lateral side of the vertical frame portion 112 to form a top structure of the oxygen concentrator.

In order to achieve modular attachment of the compressor module 20 and the molecular sieve module 30, as shown in Fig. 4, a first region A is formed on one lateral side of the vertical frame portion 112 and between a bottom surface of the upper frame portion 113 and the base portion 111, and forms the side opening structure, and the compressor module 20 is attached in the first region A. A second region B is formed between the other lateral side of the vertical frame portion 112 and the base portion 111 and forms the semi-open structure, and the molecular sieve module 30 is attached in the second region B. The semi-open structure allows a large size of the molecular sieve module 30, thereby improving an oxygen generation efficiency.

The oxygen storage tank 14 is vertically disposed in the vertical frame portion 112 of the main frame 11, so that the oxygen storage tank 14 can be compactly disposed in the main frame 11, thereby saving a lateral space of the equipment.

Further, referring to Fig. 3 and Fig. 4, when the oxygen concentrator is assembled, it is necessary to first assemble the compressor module 20 and the molecular sieve module 30, and then insert the compressor module 20 and the molecular sieve module 30 into the main frame 11. As shown in Fig. 4, the compressor module 20 is horizontally inserted into the first region A of the main frame 11 by moving to the right, and is fixed to the main frame 11 by the first detachment structure C1, the molecular sieve module 30 is pressed into the second region B on a right side of the main frame 11 from top to bottom, and is fixed to the main frame 11 by the second detachment structure C2, and finally, the battery module 40 is slid into the bottom of the main frame 11 from left to right, and is fixed to the main frame 11 by the third detachment structure.

Similarly, when the compressor module 20 and the molecular sieve module 30 are detached, a locked state of the third detachment structure needs to be released, and the battery module 40 is first detached by sliding to the left, and then, when the compressor module 20 is detached, the locked state of the first detachment structure C1 is released, and the compressor module 20 is horizontally dragged to the left, and when the molecular sieve module 30 is detached, the locked state of the second detachment structure C2 is released, and the molecular sieve module 30 is vertically moved to the upper side.

By designing the above attaching and detaching logic, the battery module 40 has to be detached before the compressor module 20 and the molecular sieve module 30 are detached. This design prevents the battery module 40 from being misoperated or damaged when the compressor module 20 and the molecular sieve module 30 are being detached, thereby improving the operation safety.

In the following description, a flowing path of an oxygen generation airflow of the modular oxygen concentrator of this application will be described in detail.

Referring to Fig. 8, an air inlet 1131 is provided in a side surface of the upper frame portion 113 of the main frame 11, and an air outlet hole 1132 is provided in a top surface of the side opening structure. The ambient air enters through the air inlet 1131 and is discharged from the air outlet hole 1132 to form an oxygen generation airflow.

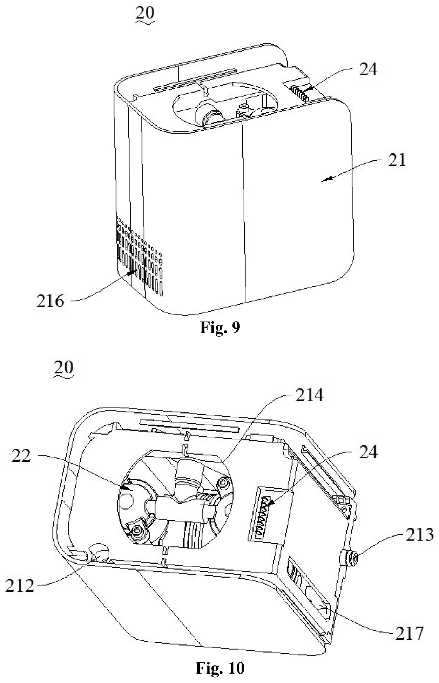

Referring to Fig. 10, a top of the compressor shell assembly 21 is provided with an air inlet cavity 212 corresponding to the air outlet hole 1132, an air guide pipe (not shown) is provided inside the compressor shell assembly 21, and the air inlet cavity 212 introduces the oxygen generation airflow into the compressor 22 through the air guide pipe.

The compressor air receiving seat 191 is provided at a bottom at an inner side of the side opening structure, and as shown in Fig. 7, the compressor air receiving seat 191 is provided at a bottom end of the vertical frame portion 112 of the main frame 11. A compressor air outlet interface 213 communicating with a compressor air discharge port protrudes from a side surface of the compressor module 20 located on the inner side of the side opening structure.

After the compressor module 20 is assembled in place in the horizontal direction, the compressor air outlet interface 213 is correspondingly inserted into the compressor air receiving seat 191 to achieve hermetic connection.

An air outlet end of the compressor air receiving seat 191 communicates with the molecular sieve air receiving seat 192 by pipelines.

Referring to Fig. 7, the molecular sieve air receiving seat 192 is disposed on a bottom surface of the semi-open structure, that is, the molecular sieve air receiving seat 192 is disposed on the base portion 111 of the main frame 11. The molecular sieve air receiving seat 192 has an air inlet channel and an oxygen outlet channel. The air inlet channel communicates with the air outlet end of the compressor air receiving seat 191 by pipelines, and the oxygen outlet channel is connected to the oxygen storage tank 14 by pipelines.

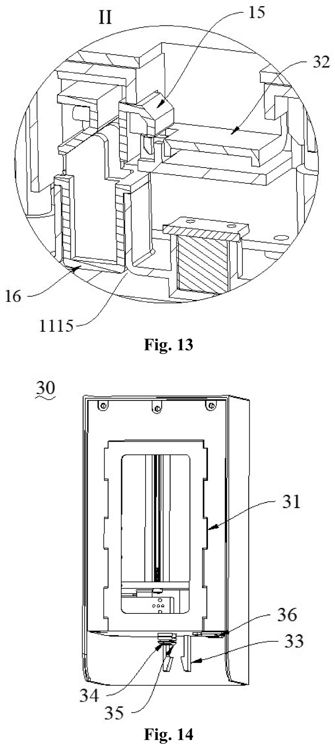

Referring to Fig. 14, a molecular sieve air inlet interface 34 and a molecular sieve oxygen outlet interface 35 both protrude from a bottom of the molecular sieve module 30.

After the molecular sieve module 30 is assembled downward in place in the vertical direction, the molecular sieve air inlet interface 34 and the molecular sieve oxygen outlet interface 35 are respectively inserted into the air inlet channel and the oxygen outlet channel in the molecular sieve air receiving seat 192 to achieve the hermetic connection.

The specific flowing path of the oxygen generation airflow is as follows. After being compressed by the compressor 22, the oxygen generation airflow is delivered into the molecular sieve module 30 through the compressor air discharge port, the compressor air outlet interface 213, the compressor air receiving seat 191, the air inlet channel of the molecular sieve air receiving seat 192, and the molecular sieve air inlet interface 34, and oxygen and nitrogen are separated by the molecular sieve module 30. The separated oxygen is delivered to the oxygen storage tank 14 for storage through the molecular sieve oxygen outlet interface 35 and the oxygen outlet channel of the molecular sieve air receiving seat 192, and then is output to an oxygen injection valve from an oxygen outlet at a top of the oxygen storage tank 14, and the oxygen is output if it is detected that the user inhales. The nitrogen generated by the molecular sieve module 30 is discharged through the nitrogen discharge port and a nitrogen discharge muffler.

In the following description, a circuit connection between the functional modules of the modular oxygen concentrator of this application will be described in detail.

Referring to Figs. 8 and 10, in some embodiments of this application, the electrical socket structures for the compressor module 20 and the main frame module 10 include a first electrical connector 1101 and a second electrical connector 24.

As shown in Fig. 8, the first electrical connector 1101 is disposed on the bottom surface or the top surface of the side opening structure and electrically connected to the control assembly 12. As shown in Fig. 10, the second electrical connector 24 is disposed at a bottom or top of the compressor module 20 corresponding to the first electrical connector 1101. One of the first electrical connector 1101 and the second electrical connector 24 is a plug, and the other is a socket. After the compressor module 20 is assembled in place in the horizontal direction, the electrical connection is performed by laterally inserting the plug into the socket. In some embodiments, the first electrical connector 1101 is the socket, and the second electrical connector 24 is the plug.

Referring to Figs. 7 and 14, in some embodiments of this application, the electrical socket structures for the molecular sieve module 30 and the main frame module 10 include a third electrical connector 1102 and a fourth electrical connector 36.

The third electrical connector 1102 is disposed on the bottom surface of the semi-open structure, that is, on the base portion 111 of the main frame 11, and is electrically connected to the control assembly 12. The fourth electrical connector 36 is disposed at the bottom of the molecular sieve module 30 corresponding to the third electrical connector 1102. One of the third electrical connector 1102 and the fourth electrical connector 36 is a plug, and the other is a socket. After the molecular sieve module 30 is assembled in place in the vertical direction, the electrical connection is performed by vertically inserting the plug into the socket. In some embodiments, the third electrical connector 1102 is the plug, and the fourth electrical connector 36 is the socket.

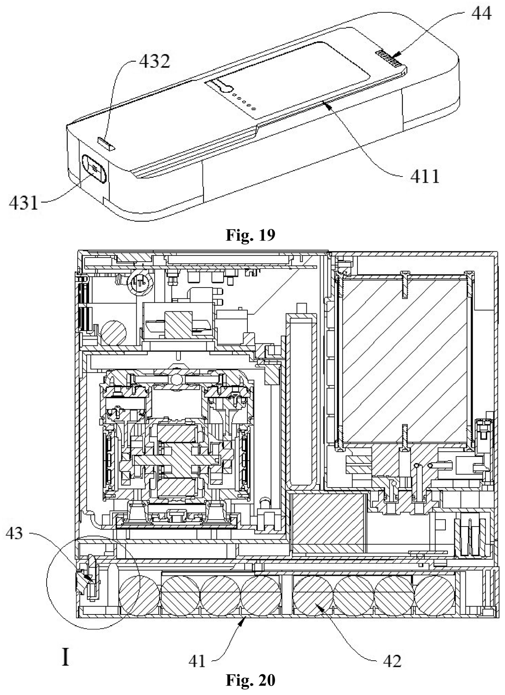

Referring to Figs. 8 and 19, in some embodiments of this application, the electrical socket structures for the battery module 40 and the main frame module 10 include a fifth electrical connector 1103 and a sixth electrical connector 44.

The fifth electrical connector 1103 is disposed on the bottom surface of the main frame 11 and electrically connected to the control assembly 12. The sixth electrical connector 44 is disposed on a top of the battery module 40 corresponding to the fifth electrical connector 1103. One of the fifth electrical connector 1103 and the sixth electrical connector 44 is a plug, and the other is a socket. After the battery module 40 is assembled in place in the horizontal direction, the electrical connection is performed by laterally inserting the plug into the socket. In some embodiments, the fifth electrical connector 1103 is the plug, and the sixth electrical connector 44 is the socket.

In the following description, a sliding and detachment structure of the compressor module 20 will be described in detail.

In some embodiments of this application, the compressor module 20 is horizontally and slidably connected to a top surface of the base portion 111 by the second sliding groove structure. That is, the compressor module 20 is attached and detached in the horizontal direction.

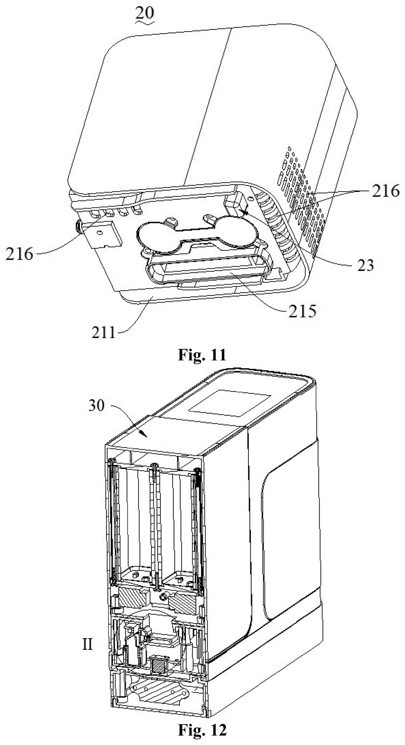

Specifically, as shown in Figs. 7 and 11, the second sliding groove structure includes at least two second slot limiting members 1113 which are respectively disposed on the top surface of the base portion 111, and the two second slot limiting members 1113 are disposed opposite to each other. Limiting edges 211 extending downward are disposed on two opposite sides on the bottom of the compressor module 20, and the compressor module 20 can slide along the second slot limiting members 1113 by the limiting edges 211. Each of the limiting edges 211 is preferably disposed outside the second slot limiting member 1113. The second sliding groove structure not only guides the compressor module 20 to slide, but also limits other displacements of the compressor module 20 in the horizontal direction, and the displacement of the compressor module 20 in an up-down direction is limited by the structure of the main frame 11.

In some embodiments of this application, the first detachment structure C1 includes a filtering cavity opening 215 provided at the bottom of the compressor module 20, a main frame opening 1118 provided in the main frame 11, and a cover body 1104.

The filtering cavity opening 215 communicates with a filtering cavity located in the compressor module 20 to filter inlet air of the compressor 22. Filter cotton may be placed in the filtering cavity.

The cover body 1104 is detachably disposed at the filtering cavity opening 215 to open or close the filtering cavity.

The main frame opening 1118 is provided in the main frame 11, and an opening size of the main frame opening 1118 is adapted to the cover body 1104, so that the cover body 1104 can be detached or attached through the main frame opening 1118.

The cover body 1104 has a cover body extension portion 11041, and the cover body extension portion 11041 at least partially extends into the main frame opening 1118 to limit sliding movement between the compressor module 20 and the main frame 11.

In the case of attachment, the compressor module 20 is attached into the side opening structure of the main frame 11 along a sliding direction, a position of the filtering cavity opening 215 corresponds to a position of the main frame opening 1118 when installed in place, and then the cover body 1104 is attached through the main frame opening 1118, the filtering cavity opening 215 is closed by the cover body 1104, and the compressor shell assembly 21 and the main frame 11 are limited. In the case of detachment, the cover body 1104 is first detached by the main frame opening 1118, the position limitation on the compressor shell assembly 21 and the main frame 11 by the cover body 1104 is released, and then the compressor module 20 is detached from the side opening structure.

Further, the first detachment structure C1 further includes a limiting connector, and the limiting connector is disposed between the main frame 11 and the compressor module 20 to connect the main frame 11 and the compressor module 20. When only the cover body 1104 needs to be detached to clean or replace the filter cotton, the limiting connector can ensure stable connection between the compressor module 20 and the main frame 11. In some embodiments, the limiting connector is a quick release bolt.

In some other embodiments of this application, as shown in Fig. 11, the limiting connector is a compressor key 23, the compressor key 23 is disposed at the compressor module 20, the main frame 11 is provided with a limiting through hole 1117, and the compressor key 23 is fit and locked by being inserted into the limiting through hole 1117.

As shown in Fig. 7, the limiting through hole 1117 is disposed in the base portion 111 of the main frame 11 in a vertical penetrating manner. The compressor key 23 is disposed at the bottom of the compressor module 20. The compressor key 23 is locked by being inserted into the limiting through hole 1117. When being pressed, the compressor key 23 moves upward to exit the limiting through hole 1117, thereby releasing a locked state of the compressor key 23 and the limiting through hole 1117.

Further, the first detachment structure C1 further includes a spring (not shown), and the spring is connected to the compressor key 23 to keep the compressor key 23 in the locked state and to reset the compressor key 23 after being pressed.

By providing the first detachment structure C1, in a case of detaching the compressor module 20, the user only needs to detach the cover body 1104 and then press the compressor key 23 to easily remove the compressor module 20.

Since the compressor key 23 is disposed inside the base portion 111, after the battery module 40 is detached, the cover body 1104 can be detached through the main frame opening 1118 first, and then the compressor key 23 is pressed through the limiting through hole 1117 to quickly detach the compressor module 20.

In the following description, a sliding and detachment structure of the molecular sieve module 30 will be described in detail.

In some embodiments of this application, the molecular sieve module 30 is vertically and slidably connected to the side surface of the vertical frame portion 112 by the third sliding groove structure. That is, the molecular sieve module 30 is attached and detached in the vertical direction.

Specifically, as shown in Figs. 6 and 14, the third sliding groove structure includes at least two third slot limiting members 1121 which are respectively disposed on the side surface of the vertical frame portion 112, and the two third slot limiting members 1121 are disposed opposite to each other to form sliding grooves. The side surface of the molecular sieve module 30 is provided with a third sliding portion 31, and the third sliding portion 31 is slidably attached in the sliding grooves and is engaged with the third slot limiting members 1121 to limit the displacement of the molecular sieve module 30 in a direction perpendicular to the sliding direction (horizontal direction).

In the case of the attachment, an operator only needs to slide the molecular sieve module 30 vertically along the third sliding groove structure, so that the molecular sieve module 30 can quickly reach an approximate attachment position, which greatly reduces an adjustment time and an adjustment difficulty during the attachment. After the molecular sieve module 30 slides into place, the second detachment structure C2 can quickly fix the molecular sieve module 30 on the main frame 11 to complete the attachment. In the case of the detachment, the second detachment structure C2 is released from the locked state first, and then the molecular sieve module 30 is slid out along the third sliding groove structure.

In some embodiments of this application, as shown in Figs. 12 and 13, the second detachment structure C2 includes a locking groove 32 provided on the bottom surface of the molecular sieve module 30, and a locking member 15 and a molecular sieve key 16 provided on the base portion 111 of the main frame 11.

The locking member 15 and the molecular sieve key 16 are movably disposed on the main frame 11. Specifically, the bottom surface of the base portion 111 is provided with a molecular sieve key attachment hole 1115 for attaching the molecular sieve key 16, and the molecular sieve key 16 is disposed inside the molecular sieve key attachment hole 1115 in an up-down slidable manner. The locking member 15 is moved to lock the molecular sieve module 30 after engaging with the locking groove 32, and is released from the locked state after exiting the locking groove 32. In some embodiments, a detachment and attachment direction of the molecular sieve module 30 is perpendicular to a movable direction of the locking member 15.

According to the disposing of the second detachment structure C2, it is only necessary to align the molecular sieve module 30 with the main frame 11 and move the molecular sieve module 30 in place along the detachment and attachment direction, and then push the locking member 15 to be inserted into the locking groove 32 to complete the locking, and at the same time, the detachment and attachment direction of the molecular sieve module 30 is perpendicular to the movable direction of the locking member 15, so that a locking fit stability of the locking member 15 and the locking groove 32 is high, and a shaking gap after the molecular sieve module 30 is attached is reduced.

Since the molecular sieve key 16 is disposed on the bottom surface of the base portion 111, after the battery module 40 is detached, the molecular sieve module 30 can be quickly detached by pressing the molecular sieve key 16.

In some other embodiments of this application, as shown in Figs. 14 to 16, the second detachment structure C2 includes an engagement pawl 33 provided on the bottom surface of the molecular sieve module 30, an engagement port 1114 provided on the base portion 111 and matching the engagement pawl 33, and a molecular sieve button 17 for releasing an engagement between the engagement pawl 33 and the engagement port 1114.

The engagement pawl 33 extends along an attachment direction of the molecular sieve module 30, that is, the engagement pawl 33 is disposed vertically. The detachment and attachment direction of the molecular sieve module 30 is parallel to a movement direction when the molecular sieve button 17 releases the engagement.

By providing the second detachment structure C2, in a case of detaching the molecular sieve module 30, the user only needs to press the molecular sieve button 17 to easily remove the molecular sieve module 30, and the entire process does not need complex tools and professional maintenance skills, which greatly reduces an operation difficulty. In addition, this simple structure and clear movement mode ensure a reliability of a function of locking and unlocking the molecular sieve module 30 during the use of the oxygen concentrator, and are conducive to reducing faults.

In the present embodiment, the base portion 111 is provided with a molecular sieve button attachment hole 1116 for attaching the molecular sieve button 17, and since the molecular sieve button 17 is disposed on the bottom surface of the base portion 111, after the battery module 40 is detached, the molecular sieve module 30 can be quickly detached by pressing the molecular sieve button 17.

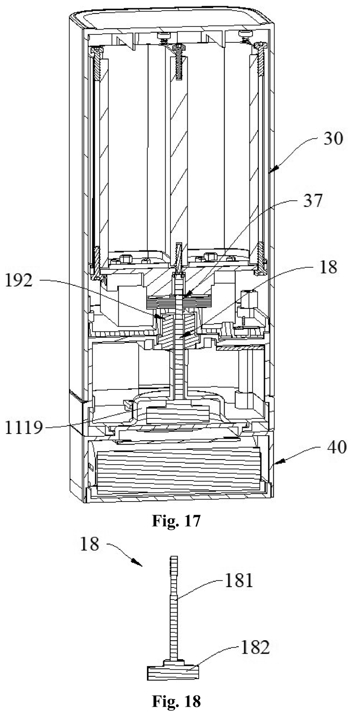

In some other embodiments of this application, as shown in Figs. 17 and 18, the second detachment structure C2 includes a molecular sieve fastener 18 provided at the bottom of the main frame 11 and a fastening hole 37 provided in the molecular sieve module 30, and the fastening hole 37 matches the molecular sieve fastener 18. A rotation locking structure is adopted between the fastening hole 37 and the molecular sieve fastener 18, and the fastening hole 37 adopts a threaded hole, and an upper end of the molecular sieve fastener 18 adopts a matching external thread.

The molecular sieve fastener 18 is disposed vertically, and a through hole extending vertically and allowing the molecular sieve fastener 18 to penetrate through is provided in the molecular sieve air receiving seat 192. The molecular sieve fastener 18 penetrates through the molecular sieve air receiving seat, which is beneficial to the stability of the molecular sieve air inlet interface 34 and the molecular sieve oxygen outlet interface 35 inserted into the molecular sieve air receiving seat 192 after the molecular sieve module 30 is attached and fixed, and avoids a problem that a normal operation of the equipment is affected by air leakage due to the unstable connection between the molecular sieve air inlet interface 34 and the molecular sieve oxygen outlet interface 35.

The molecular sieve fastener 18 has a fastening column 181 and a handle 182 located at a lower end of the fastening column 181, and an accommodation groove 1119 for accommodating the handle 182 is provided at a lower end of the base portion 111. The accommodation groove 1119 provides a space for placing the handle 182, so that the structure is more compact and reasonable. A connection hole is opened between the through hole and the accommodation groove 1119, and the through hole and the connection hole are coaxially disposed. The molecular sieve fastener 18 penetrates through the accommodation groove 1119, the connection hole, and the through hole from the bottom to the top, and then is fastened into the fastening hole 37, so that a penetrating path of the molecular sieve fastener 18 is smooth, which is conducive to the attachment operation in a reasonable order, and ensures that the entire connection and fixing process can be completed efficiently and accurately.

In the following description, a sliding and detachment structure of the battery module 40 will be described in detail.

In some embodiments of this application, referring to Figs. 6 and 19, the first sliding groove structure includes at least two first slot limiting members 1112 that are respectively disposed on the bottom surface of the base portion 111, and the two first slot limiting members 1112 are disposed opposite to each other to form sliding grooves. The battery module 40 is provided with a sliding portion 411, and the sliding portion 411 is slidably attached in the sliding grooves and is engaged with the first slot limiting member 1112 to limit the displacement of the battery module 40 in the direction perpendicular to the sliding direction. By designing such a structure including two limiting members and the sliding grooves, the stability of the sliding connection of the battery module 40 is effectively improved, and the tilting or shaking of the battery module 40 due to an external force can be avoided, so that the battery module 40 can be more stably and reliably attached.

In some embodiments of this application, as shown in Figs. 20 to 22, the third detachment structure includes a limiting slot 1111 disposed on the bottom surface of the main frame 11 and a quick detachment assembly 43 disposed on the battery module 40.

The battery module 40 includes a battery module outer shell 41 and a battery assembly 42 disposed inside the battery module outer shell 41. The quick detachment assembly 43 is attached in the battery module outer shell 41.

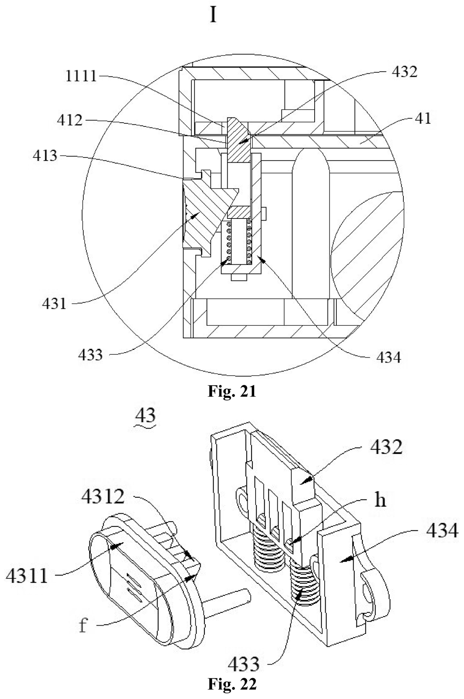

As shown in Fig. 22, the quick detachment assembly 43 includes a battery key 431 and a snap 432. As shown in Fig. 21, the snap 432 is engaged with the limiting slot 1111 to limit the displacement of the battery module 40 in the sliding direction. The battery key 431 is configured to drive the snap 432 to move, so that the snap 432 exits the limiting slot 1111, thereby releasing the engagement between the snap 432 and the limiting slot 1111.

Specifically, the snap 432 slides in a direction perpendicular to the sliding direction of the battery module 40, and is disposed inside the battery module outer shell 41. The battery module outer shell 41 is provided with a through hole 412 opposite to the limiting slot 1111, and the snap 432 protrudes through the through hole 412 to be engaged with the limiting slot 1111. The battery key 431 is located on one lateral side of the snap 432, and the battery key 431 is pressed to drive the snap 432 to exit the limiting slot 1111, thereby completing a quick detachment operation of the battery module 40.

The battery module outer shell 41 is provided with a battery key attachment hole 413, the battery key 431 is attached in the battery key attachment hole 413, and a pressing direction of the battery key 431 is perpendicular to a sliding direction of the snap 432. In some embodiments, the battery key 431 is attached to a side surface of the battery module outer shell 41, and the pressing direction of the battery key 431 is perpendicular to the side surface of the battery module outer shell 41, which facilitates applying an external force to the battery key 431.

Further, the quick detachment assembly 43 further includes an elastic member 433, and the elastic member 433 is connected to the snap 432, and is configured to keep the snap 432 engaged with the limiting slot 1111 when the battery key 431 is not pressed, and to automatically reset the snap 432 after the battery key 431 is released. The adoption of the elastic member 433 greatly improves the operation safety and convenience of the quick detachment assembly 43, and can automatically return to an initial state without requiring any additional steps after the user completes the operation, thereby preventing a problem that the battery module 40 cannot be properly locked due to an improper operation.

Referring to Fig. 22, the battery key 431 includes a battery key main body 4311 and a force applying portion 4312 protruding from the battery key main body 4311, and the force applying portion 4312 has a force applying inclined surface f which is disposed obliquely. The snap 432 has a receiving surface h matching the force applying inclined surface f, and the battery key 431 drives the snap 432 to move in a direction away from the limiting slot 1111 by the interaction of the force applying inclined surface f and the receiving surface h.

In some embodiments of this application, the quick detachment assembly 43 further includes an attachment seat 434, the attachment seat 434 is fixedly connected to the battery module outer shell 41, and the snap 432 and the battery key 431 are both slidably disposed on the attachment seat 434. The attachment seat 434 provides a stable working platform for the snap 432 and the battery key 431, and at the same time, the snap 432 and the battery key 431 can be assembled prior to the attachment seat 434 and then integrally attached to the battery module outer shell 41, thereby improving an assembly and disassembly efficiency.

In the following description, a flowing path of a heat dissipation airflow of the modular oxygen concentrator of this application will be described in detail.

In some embodiments of this application, as shown in Figs. 6 and 8, in order to dissipate heat of the compressor module 20, an air outlet 1133 is further disposed on the bottom surface of the upper frame portion 113 and the top surface of the side opening structure of the main frame 11, a fan 13 is disposed inside the upper frame portion 113 on an inner side of the air outlet 1133, and the fan 13 can drive air to enter through the air inlet 1131 and be discharged from the air outlet 1133.

The airflow entering through the air inlet 1131 and discharged from the air outlet 1133 forms the heat dissipation airflow, and the top of the compressor shell assembly 21 is provided with an air inlet region 214 corresponding to the air outlet 1133, and as shown in Fig. 10, the heat dissipation airflow flows into the compressor shell assembly 21 through the air inlet region 214 to dissipate heat of the compressor 22 inside the compressor module 20.

That is, in the present embodiment, a part of the ambient air entering through the air inlet 1131 is discharged from the air outlet hole 1132 to form the oxygen generation airflow, and a part of the ambient air is discharged from the air outlet 1133 to form the heat dissipation airflow.

After the heat dissipation airflow entering the compressor module 20 dissipates the heat of the compressor 22, hot air can be divided into two parts to be output, that is, one part is discharged to the outside, and the other part flows to the molecular sieve module 30 for heating the molecular sieve inside the molecular sieve module 30.

Specifically, as shown in Figs. 10 and 11, the compressor shell assembly 21 is provided with an external heat dissipation port 216 and an internal heat dissipation port 217, a part of the heat dissipation airflow is output to the outside from the external heat dissipation port 216, and a part of the heat dissipation airflow flows to the molecular sieve module 30 through the internal heat dissipation port 217 to heat the molecular sieve inside the molecular sieve module 30, and then is discharged to the outside through the internal heat dissipation port 217 and the external heat dissipation port 216, and the nitrogen discharged from the molecular sieve module 30 is also discharged through the external heat dissipation port 216 after being subjected to a muffling treatment.

When an ambient temperature of the oxygen concentrator is low, for example, in winter, an external temperature is low, a part of the heat dissipation airflow discharged from the compressor module 20 heats the molecular sieve module 30, so that the molecular sieve module 30 can work efficiently in a low-temperature environment. When the external temperature is high, the molecular sieve module 30 does not need to be heated, and a movable or detachable cover plate (not shown) is provided at the internal heat dissipation port 217 to close the internal heat dissipation port 217.

Referring to Fig. 7, a gap a is provided between the oxygen storage tank 14 and an inner wall of the vertical frame portion 112, and the first region A communicates with the second region B via the gap a. The heat dissipation airflow may flow to the molecular sieve module 30 through the internal heat dissipation port 217 and the gap a to perform temperature compensation and preheating on the molecular sieve module 30, thereby improving the working efficiency of the molecular sieve module 30.

In some embodiments of this application, the control assembly 12 includes a main control board, and a display and detection unit and an electronic control unit are integrated on the main control board.

The display and detection unit is responsible for a touch operation and data collection, so that the user can monitor a state of the oxygen concentrator in real time. Specifically, in some embodiments, a display screen is disposed on a top of the upper frame portion 113, and the display screen is located above the main control board. The display screen is a touch screen, so that the user can more conveniently view equipment state information, such as important parameters such as oxygen concentration, temperature, and pressure, by the display screen, and can perform simple controls on the equipment by touch.

The electronic control unit controls operation parameters of the oxygen concentrator, for example, electrically controls the fan 13, the compressor module 20, and the molecular sieve module 30 to ensure the stable operation of the system under different working conditions.

In addition, the main control board is disposed inside a heat dissipation air channel of the upper frame portion, and heat generated by the main control board can be taken away by air flowing in the air channel, so that a working temperature of the main control board can be effectively reduced, thereby extending a service life of the main control board and improving the stability and reliability of the system.

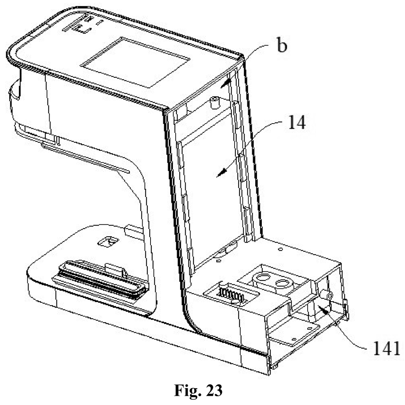

Referring to Fig. 23, the main frame module 10 is further provided with an auxiliary oxygen storage tank 141, and the auxiliary oxygen storage tank 141 is disposed inside the base portion 111 and is in series communication with the oxygen storage tank 14. The connection locations of these two tanks communicate with each other by a sealing rubber pad. The auxiliary oxygen storage tank 141 firstly fully utilizes a space in the existing structure of the equipment to increase air storage capacity, and secondly, provides additional oxygen to maintain stable oxygen supply when the equipment is under heavy load or has an increased oxygen demand.

This dual oxygen storage design greatly enhances a continuous oxygen supply capacity of the oxygen concentrator, and effectively alleviates a problem of insufficient oxygen supply of the equipment under high demand conditions by the coordinated operation of the oxygen storage tank 14 and the auxiliary oxygen storage tank 141. Meanwhile, the auxiliary oxygen storage tank 141 is disposed on the base portion 111, so that the structure of the equipment is more compact and reasonable, and a space utilization rate of the main frame module 10 is further improved.

As shown in Fig. 23, one end of the main control board is located above the oxygen storage tank 14, and since electronic components need to be attached to the main control board, a gap b is provided between a top of the oxygen storage tank and the main control board. Meanwhile, an auxiliary air inlet channel is provided at an upper portion of the molecular sieve module 30, an auxiliary air inlet 38 (as shown in Fig. 2) is provided in the outer shell of the molecular sieve module 30 to be in communication with the auxiliary air inlet channel, the auxiliary air inlet channel communicates with the gap b, and a heat dissipation effect is achieved by using the auxiliary air inlet channel.

The above embodiments are merely used to describe the technical solutions of the present disclosure, and are not intended to limit the present disclosure. Although the present disclosure has been described in detail with reference to the one or more embodiments, those skilled in the art can still modify the technical solutions described in the one or more embodiments, or equivalently replace some of the technical features, and these modifications or replacements do not make the essence of the corresponding technical solutions depart from the spirit and scope of the technical solutions claimed by the present disclosure.

## Claims

1. A modular oxygen concentrator, **characterized by** comprising:
a main frame module comprising a main frame, and an oxygen storage tank and a control assembly disposed inside the main frame;
a compressor module located on one lateral side of the main frame and slidably and detachably connected to the main frame by a first detachment structure;
a molecular sieve module located on the other lateral side of the main frame and slidably and detachably connected to the main frame by a second detachment structure; and
a battery module located on a lower side of the main frame and slidably and detachably connected to the main frame by a third detachment structure; wherein
the compressor module, the molecular sieve module, and the battery module are electrically connected to the main frame module by electrical socket structures, respectively; and
the main frame module is provided with a compressor air receiving seat interfacing with an air outlet of the compressor module, and a molecular sieve air receiving seat interfacing with an air inlet and an air outlet of the molecular sieve module, and the compressor air receiving seat, the molecular sieve air receiving seat, and the oxygen storage tank are connected in sequence by pipelines to be in air communication.

2. The modular oxygen concentrator according to claim 1, **characterized in that**
the first detachment structure and the second detachment structure are both located at a bottom of the main frame, and after the battery module is detached, the first detachment structure and the second detachment structure are released from a locked state.

3. The modular oxygen concentrator according to claim 1, **characterized in that**
a first sliding groove structure is provided between the battery module and a bottom surface of the main frame, and the battery module is detached and attached in a horizontal direction via the first sliding groove structure.

4. The modular oxygen concentrator according to claim 1, **characterized in that**
the one lateral side of the main frame is a side opening structure, the compressor module is embedded in the side opening structure, a second sliding groove structure is provided between an upper end and/or a lower end of the side opening structure and the compressor module, and the compressor module is detached and attached in a horizontal direction via the second sliding groove structure.

5. The modular oxygen concentrator according to claim 1, **characterized in that**
the other lateral side of the main frame is a semi-open structure, the molecular sieve module is disposed in the semi-open structure, a third sliding groove structure is disposed between a side surface of the semi-open structure and the molecular sieve module, and the molecular sieve module is detached and attached in a vertical direction via the third sliding groove structure.

6. The modular oxygen concentrator according to claim 4, **characterized in that**
the compressor module comprises a compressor shell assembly and a compressor disposed inside the compressor shell assembly;
an upper side surface of the main frame is provided with an air inlet, and a top surface of the side opening structure is provided with an air outlet hole;
ambient air enters through the air inlet and is discharged through the air outlet hole to form an oxygen generation airflow; and
a top of the compressor shell assembly is provided with an air inlet cavity corresponding to the air outlet hole, and the air inlet cavity introduces the oxygen generation airflow into the compressor through an air guide pipe.

7. The modular oxygen concentrator according to claim 4, **characterized in that**
the compressor air receiving seat is provided at a bottom at an inner side of the side opening structure;
a compressor air outlet interface communicating with a compressor air discharge port is provided on a side surface of the compressor module located on the inner side of the side opening structure; and
after the compressor module is assembled in place in the horizontal direction, the compressor air outlet interface is correspondingly inserted into the compressor air receiving seat to achieve hermetic connection.

8. The modular oxygen concentrator according to claim 5, **characterized in that**
the molecular sieve air receiving seat is disposed on a bottom surface of the semi-open structure, and has an air inlet channel and an oxygen outlet channel;
a bottom of the molecular sieve module is provided with a molecular sieve air inlet interface and a molecular sieve oxygen outlet interface; and
after the molecular sieve module is assembled in place in a vertical direction, the molecular sieve air inlet interface and the molecular sieve oxygen outlet interface are respectively inserted into the air inlet channel and the oxygen outlet channel in the molecular sieve air receiving seat to achieve hermetic connection;
the other end of the air inlet channel is in communication with the compressor air receiving seat by pipelines, and the other end of the oxygen outlet channel is in communication with the oxygen storage tank by pipelines.

9. The modular oxygen concentrator according to claim 4, **characterized in that** the electrical socket structure between the compressor module and the main frame module comprises:
a first electrical connector, disposed on a bottom surface or a top surface of the side opening structure, and electrically connected to the control assembly; and
a second electrical connector, disposed at a bottom or a top of the compressor module corresponding to the first electrical connector; wherein
one of the first electrical connector and the second electrical connector is a plug, and the other is a socket;
after the compressor module is assembled in place in a horizontal direction, electrical connection is achieved by laterally inserting the plug into the socket.

10. The modular oxygen concentrator according to claim 5, **characterized in that** the electrical socket structure between the molecular sieve module and the main frame module comprises:
a third electrical connector, disposed on a bottom surface of the semi-open structure, and electrically connected to the control assembly; and
a fourth electrical connector, disposed at a bottom of the molecular sieve module corresponding to the third electrical connector; wherein
one of the third electrical connector and the fourth electrical connector is a plug, and the other is a socket;
after the molecular sieve module is assembled in place in a vertical direction, electrical connection is achieved by vertically inserting the plug into the socket.

11. The modular oxygen concentrator according to claim 3, **characterized in that** the electrical socket structure between the battery module and the main frame module comprises:
a fifth electrical connector, disposed on a bottom surface of the main frame, and electrically connected to the control assembly; and
a sixth electrical connector, disposed on a top of the battery module corresponding to the fifth electrical connector; wherein
one of the fifth electrical connector and the sixth electrical connector is a plug, and the other is a socket;
after the battery module is assembled in place in a horizontal direction, electrical connection is achieved by laterally inserting the plug into the socket.

12. The modular oxygen concentrator according to claim 2, **characterized in that** the first detachment structure comprises:
a filtering cavity opening, provided at a bottom of the compressor module, the filtering cavity opening communicating with a filtering cavity located in the compressor module and configured to filter inlet air of a compressor;
a cover body, detachably disposed at the filtering cavity opening, configured to open or close the filtering cavity; and
a main frame opening, provided in the main frame, an opening size of the main frame opening being adapted to the cover body, so as to detach or attach the cover body through the main frame opening; wherein
the cover body has a cover body extension portion, the cover body extension portion at least partially extending into the main frame opening to limit sliding movement between the compressor module and the main frame.

13. The modular oxygen concentrator according to claim 12, **characterized in that** the first detachment structure further comprises a limiting connector, and the limiting connector is disposed between the main frame and the compressor module; the limiting connector is a quick release bolt.

14. The modular oxygen concentrator according to claim 12, **characterized in that** the first detachment structure further comprises a limiting connector, the limiting connector is a compressor key, and the compressor key is disposed on the compressor module;
the main frame is provided with a limiting through hole, and the compressor key is inserted into the limiting through hole for locking; and
when being pressed, the compressor key moves upward to exit the limiting through hole, thereby releasing a locked state of the compressor key and the limiting through hole.

15. The modular oxygen concentrator according to claim 2, **characterized in that** the second detachment structure comprises:
a locking groove, provided on a bottom surface of the molecular sieve module;
a locking member, movably disposed on the main frame, and matched with the locking groove; and
a molecular sieve key, configured to push the locking member to exit the locking groove; wherein
a detachment and attachment direction of the molecular sieve module is perpendicular to a movable direction of the locking member.

16. The modular oxygen concentrator according to claim 2, **characterized in that** the second detachment structure comprises:
an engagement pawl, provided on a bottom surface of the molecular sieve module, and extending along an attachment direction of the molecular sieve module;
an engagement port, provided on the main frame, and matched with the engagement pawl; and
a molecular sieve button, configured to release an engagement between the engagement pawl and the engagement port; wherein
a detachment and attachment direction of the molecular sieve module is parallel to a moving direction of the molecular sieve button when releasing the engagement.

17. The modular oxygen concentrator according to claim 2, **characterized in that** the second detachment structure comprises:
a molecular sieve fastener, disposed at a bottom of the main frame; the molecular sieve fastener has a fastening column and a handle located at a lower end of the fastening column; a bottom surface of the main frame is provided with an accommodation groove for accommodating the handle; a molecular sieve air receiving seat configured to be in communication with an internal air path of the molecular sieve module is provided on the main frame, and a through hole extending vertically and allowing the molecular sieve fastener to pass through is opened in the molecular sieve air receiving seat; and
a fastening hole, provided at a bottom of the molecular sieve module, and cooperatively arranged with the molecular sieve fastener.

18. The modular oxygen concentrator according to claim 2, **characterized in that** the third detachment structure comprises:
a limiting slot, disposed on a bottom surface of the main frame; and
a quick detachment assembly, disposed on the battery module, comprising a battery key and a snap; the snap is engaged with the limiting slot to limit displacement of the battery module in a sliding direction; the battery key is configured to drive the snap to move so as to make it exit the limiting slot, thereby releasing an engagement between the snap and the limiting slot.

19. The modular oxygen concentrator according to claim 6, **characterized in that**
a top surface of the side opening structure is further provided with an air outlet, and a fan is disposed in the main frame inside the air outlet;
an airflow entering through the air inlet and discharged through the air outlet forms a heat dissipation airflow;
a top of the compressor shell assembly is provided with an air inlet region corresponding to the air outlet, and the heat dissipation airflow flows into the compressor shell assembly through the air inlet region; and
the compressor shell assembly is provided with an external heat dissipation port and an internal heat dissipation port, and a part of the heat dissipation airflow is output to the outside through the external heat dissipation port; a part of the heat dissipation airflow flows to the molecular sieve module through the internal heat dissipation port.

20. The modular oxygen concentrator according to claim 19, **characterized in that**
the control assembly is disposed on an upper portion of the main frame, and the heat dissipation airflow flows through the control assembly;
the oxygen storage tank is vertically disposed in a middle portion of the main frame; the compressor module and the molecular sieve module are located on two sides of the oxygen storage tank; and
a bottom of the main frame is provided with an auxiliary oxygen storage tank, and the auxiliary oxygen storage tank is communicated in series with the oxygen storage tank.
